(19) Europäisches Patentamt

European Patent Office

Office européen des brevets

(11) Veröffentlichungsnummer : **0 419 468 B1**

(12) **EUROPÄISCHE PATENTSCHRIFT**

(51) Int. Cl.⁵ : **H01H 31/00, H02B 13/02**

(45) Veröffentlichungstag der Patentschrift :
**18.03.92 Patentblatt 92/12**

(21) Anmeldenummer : **88909298.7**

(22) Anmeldetag : **03.11.88**

(86) Internationale Anmeldenummer :
**PCT/DE88/00686**

(87) Internationale Veröffentlichungsnummer :
**WO 90/01787 22.02.90 Gazette 90/05**

(54) **METALLGEKAPSELTE, DRUCKGASISOLIERTE HOCHSPANNUNGSSCHALTANLAGE MIT ISOLIERTEM ERDUNGSSCHALTER.**

(30) Priorität : **04.08.88 DE 3826762**

(43) Veröffentlichungstag der Anmeldung :
**03.04.91 Patentblatt 91/14**

(45) Bekanntmachung des Hinweises auf die
Patenterteilung :
**18.03.92 Patentblatt 92/12**

(84) Benannte Vertragsstaaten :
**AT CH DE FR GB LI SE**

(56) Entgegenhaltungen :
**US-A- 3 778 574**
**US-A- 4 486 634**

(73) Patentinhaber : **SIEMENS
AKTIENGESELLSCHAFT
Wittelsbacherplatz 2
W-8000 München 2 (DE)**

(72) Erfinder : **FUNK, Karl-Heinz
Osloer StraSSE 116 a
W-1000 Berlin 65 (DE)**
Erfinder : **HAARHUIS, Jürgen
JahnstrassE 17
W-1000 Berlin 61 (DE)**
Erfinder : **LORENZ, Dieter
Gärtnerstrasse 1B
W-1000 Berlin 45 (DE)**

## Beschreibung

Die Erfindung bezieht sich auf eine metallgekapselte, druckgasisolierte Hochspannungsschaltanlage mit isoliertem Erdungsschalter, dessen Gehäuse über Flansche und diese verbindende Befestigungsmittel an der Kapselung der Hochspannungsschaltanlage angeflanscht ist, wobei zwischen beiden Flanschen ein Isolierstoffring gasdicht angeordnet ist, an dessen Innenseite ein ringförmiger, mit einer Anschlußfahne versehener elektrischer Leiter derart eingebettet ist, daß die nach außen geführte Anschlußfahne den Isolierstoffring radial durchsetzt und der ringförmige Teil des Leiters den Schaltstift des Erdungsschalters mit Abstand umgibt, wobei der Leiter einen Gleitkontakt trägt, über den er mit dem Schaltstift elektrisch verbunden ist.

Ein derartiger isolierter Erdungsschalter für eine metallgekapselte, druckgasisolierte Hochspannungsschaltanlage ist aus der US-PS-3 778 574 bekannt. Der in dem Isolierstoffring eingebettete Leiter mit der nach außen geführten Anschlußfahne kann über diese entweder geerdet oder für die Durchführung von Prüfungen mit einer Spannung beaufschlagt werden, die dann auf den Schaltstift des Erdungsschalters übertragen wird. Bei dem bekannten Erdungsschalter ist der ringförmige Teil des Leiters auf der Innenseite des Isolierstoffringes eingebettet. Dieser Isolierstoffring liegt zwischen dem Flansch des Gehäuses des Erdungsschalters und dem Flansch der Kapselung der Hochspannungsschaltanlage und wird von den Befestigungsmitteln, die zur Befestigung des Erdungsschalters an der Hochspannungsschaltanlage dienen, durchsetzt. Dadurch ist der Isolierstoffring mit den für die Befestigung erforderlichen Preßkräften beaufschlagt und dadurch mechanisch mit hohen Druckkräften beansprucht.

Demzufolge müssen die Anzugsmomente für die Befestigungsmittel genau und mit einem engen Toleranzbereich vorgegeben werden, um eine Überbelastung des Isolierstoffs zu vermeiden. Außerdem müssen die Befestigungsmittel mit einer Isolierung versehen sein, da sie sich in unmittelbarer Nähe des eingebetteten Leiters befinden und mit der geerdeten Kapselung in Verbirdung stehen. Ferner liegt die gesamte äußere Mantelfläche des Isolierstoffringes frei im Außenraum. Dies kann Schwierigkeiten bei einem Freilufteinsatz hervorrufen, da dann durch Ablagerungen die Isolierfähigkeit des Isolierstoffringes beeinträchtigt werden kann.

Der Erfindung liegt die Aufgabe zugrunde, bei einer metallgekapselten, druckgasisolierten Hochspannungsschaltanlage der eingangs beschriebenen Art die Isolierung des Erdungsschalters zu verbessern.

Zur Lösung dieser Aufgabe liegt bei einer metallgekapselten, druckgasisolierten Hochspannungsschaltanlage mit isoliertem Erdungsschalter gemäß der Erfindung der Isolierstoffring innerhalb eines metallischen Ringes von zumindest gleicher Höhe und ist mit diesem zwischen beiden Flanschen gasdicht angeordnet, der metallische Ring weist eine radial gerichtete Öffnung auf, durch die sich die mit einer Isolierstoffumhüllung versehene Anschlußfahne erstreckt, und die Befestigungsmittel durchsetzen nur den äußeren metallischen Ring.

Der äußere metallische Ring wirkt für den Isolierstoffring als Stützring, der den Isolierstoffring auf der gesamten äußeren Mantelfläche einschließt. Er hat lediglich an einer Stelle des Umfangs eine Öffnung, die sich aber nicht über seine gesamte Höhe erstreckt und von der isoliert und gasdicht herausgeführten Anschlußfahne durchsetzt wird, ist aber dadurch nicht unterbrochen. Es ist somit stets eine metallische Verbindung zwischen dem Gehäuse des Erdungsschalter und der Kapselung gegeben, unabhängig davon, ob der Erdungsschalter gerade zur Erdung oder zu Prüfzwecken benutzt ist. Die Befestigungsmittel sind nur durch metallische Teile geführt und benötigen keine eigene Isolierung. Außerdem ist dadurch ein genauer Isolationsabstand zwischen den Anschlußflanschen sichergestellt, sowie ein definierter Dichtspalt jeweils zwischen dem Flansch und dem Ring.

Die für die Befestigung erforderlichen Kräfte werden nur durch Metallteile aufgenommen. Der Isolierstoffring ist nur von den Druckkräften des Dichtringes belastet und daher nur geringen mechanischen Beanspruchungen unterworfen. Da weiterhin nur die dünnwandige Isolierstoffumhüllung, welche die Anschlußfahne umgibt, an den Außenraum hinausgeführt ist, eignet sich diese Ausführung auch gut für Hochspannungsschaltanlagen, die sich in Freiluft befinden.

Es ist besonders vorteilhaft, wenn der Isolierstoffring aus ausgehärtetem Gießharz besteht. In diesem Fall kann der äußere metallische Ring als Teil der notwendigen Gießform verwendet werden, in welcher der elektrische Leiter mit der Anschlußfahne eingelegt und in entsprechendem Abstand gehalten sind. Die Einbettung des Leiters erfolgt somit beim Gießen, und die Vergußmasse bildet nach dem Aushärten dann den Isolierstoffring und die Isolierstoffumhüllung der Anschlußfahne. Während der Aushärtung ergibt sich noch weiterhin der Vorteil, daß das Gießharz auf die Anschlußfahne aufschrumpft und somit dort eine gasdichte Verbindung bildet. Es sind daher keine besonderen zusätzlichen Maßnahmen zur Herstellung der Gasdichtigkeit zwischen der Anschlußfahne und dem Isolierstoffring erforderlich. Die gasdichte Abdichtung der Stirnflächen des Isolierstoffrings zu den anliegenden Stirnflächen der Flansche erfolgt in üblicher Weise mit Hilfe von Dichtringen.

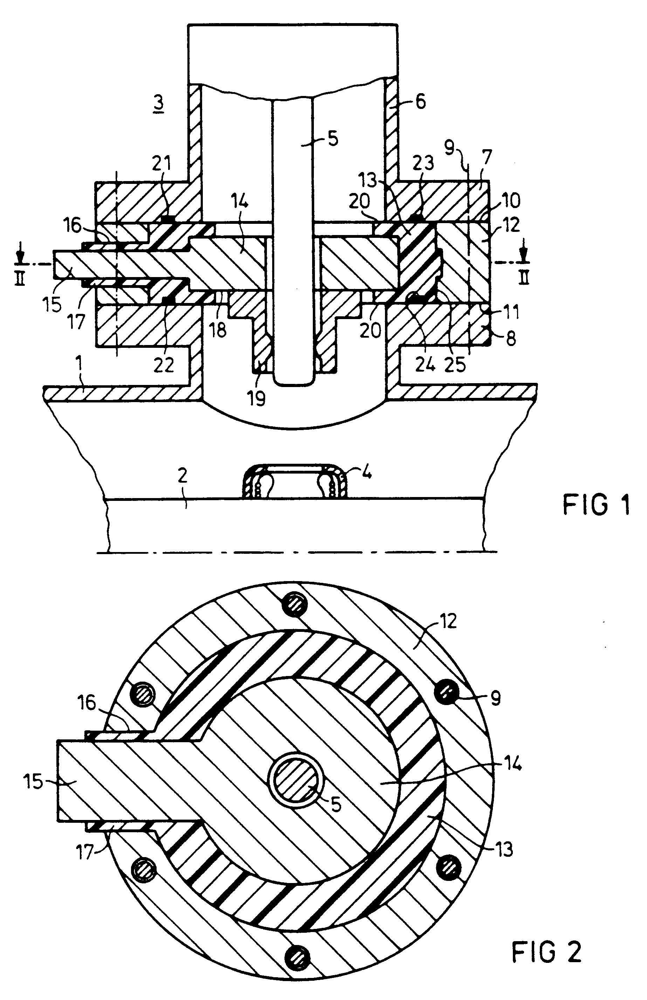

Im folgenden sei die Erfindung noch anhand des in den Figuren 1 und 2 der Zeichnung dargestellten Ausführungsbeispiels, auf welches die Erfindung jedoch nicht beschränkt ist, näher erläutert. Figur 1 zeigt, schematisch dargestellt, den Teil eines Längsschnitts durch eine metallgekapselte, druckgasisolierte Hochspannungsschaltanlage mit isoliertem Erdungsschalter. In Figur 2 ist der Schnitt II-II in Figur 1 dargestellt.

Bei einer metallgekapselten, insbesondere mit $SF_6$ druckgasisolierten Hochspannungsschaltanlage ist in einer Kapselung 1 ein Hochspannung führender Leiter 2 angeordnet, der mit einem Erdungsschalter 3 geerdet werden kann. Zu diesem Zweck weist der Leiter 2 den Gegenkontakt 4 für den Schaltstift 5 des Erdungsschalters 3 auf, der von einem nicht dargestellten Antrieb bewegt wird und in Eingriff mit dem Gegenkontakt 4 gebracht werden kann.

Das Gehäuse 6 des Erdungsschalters 3 endet in einem Flansch 7, der mit seinen Abmessungen einem Flansch 8 der Kapselung 1 entspricht. Zur Verbindung beider Flansche 7, 8 dienen nur angedeutete Befestigungsmittel 9, z. B. Bolzen oder Schrauben, die in entprechende Gewindelöcher im Flansch 8 eingeschraubt werden. Damit der Erdungsschalter 3 nicht nur zu Erdungszwecken, sondern auch zu Prüfzwecken ausgenutzt werden kann, liegen die einander zugewandten Stirnfläche 10 des Flansches 7 und die Stirnfläche 11 des Flansches 8 nicht unmittelbar aneinander, sondern zwischen ihnen ist ein metallischer Ring 12 angeordnet, der von den Befestigungsmitteln 9 durchsetzt ist. Er weist nicht die gleiche Breite wie die Flansche 7 und 8 auf sondern ist schmaler.

In dem metallischen Ring 12 liegt ein Isolierstoffring 13, an dessen Innenseite ein ringförmiger elektrischer Leiter 14 eingebettet ist. Dieser Leiter 14 weist eine Anschlußfahne 15 auf, die sich in radialer Richtung nach außen erstreckt und den Isolierstoffring 13 ebenso wie den metallischen Ring 12 durchsetzt, wobei die Öffnung 16 im metallischen Ring 12 einen größeren Querschnitt als die Anschlußfahne 15 aufweist und der so entstandene Zwischenraum durch eine entsprechend dünnwandige Isolierstoffumhüllung 17 ausgefüllt ist. Die Dicke dieser Isolierstoffumhüllung 17 ist in entsprechend von der Höhe der anzulegenden Prüfspannung bemessen. Der Leiter 14 trägt auf seiner der Kapselung 1 zugewandten Stirnfläche 18 den Gleitkontakt 19, der am Schaltstift 5 des Erdungsschalters 3 anliegt. Auf diese Weise ist ein galvanischer Kontakt zwischen dem Schaltstift 5 und dem Leiter 14 bzw. dessen Anschlußfahne 15 gegeben, so daß von der Anschlußfahne 15 her entweder die Prüfspannung oder Erdpotential auf den Schaltstift 5 übertragen werden kann.

Der Isolierstoffring 13 besteht aus ausgehärtetem Gießharz, z. B. Epoxidharz. Er wird dadurch hergestellt, daß der als Stützring wirkende metallische Ring 12 Teil einer Gießform ist, in welcher der Leiter 14 mit seiner Anschlußfahne 15 entsprechend gegenüber den Wänden der Gießform bzw. der Öffnung 16 auf Abstand gehalten ist. Durch den Gießvorgang und das darauffolgende Aushärten des Gießharzes wird der Leiter 14 in den Isolierstoffring 13 eingebettet. Dabei schrumpft die Isolierstoffumhüllung 17 auf die Anschlußfahne 15 gasdicht auf. Bei der Montage des Isolierstoffringes 13 mit dem Leiter 14 ist somit nur noch für eine gasdichte Abdichtung der Stirnflächen 20 des Isolierstoffringes 13 gegenüber der Stirnfläche 10 des Flansches 7 bzw. der Stirnfläche 11 des Flansches 8 zu sorgen, damit das $SF_6$ nicht aus dem Innenraum der Kapselung 1 und des Erdungsschalters 3 in den umgebenden Außenraum übertreten kann. Dazu sind zwei Dichtringe 21, 22, insbesondere O-Ringe vorgesehen. Von diesen ist der Dichtring 21 in einer Nut 23 im Flansch 7 angeordnet, während der Dichtring 22 in einer Nut 24 im Isolierstoffring 13 liegt.

Der Isolierstoffring 13 ist durch den metallischen Ring 12 von gleicher Höhe von den mechanischen Kräften, gegeben durch die Befestigungsmittel 9 zur Befestigung des Gehäuses 6 des Erdungsschalters 3 an der Kapselung 1, vollkommen entlastet. Er schwimmt praktisch zwischen den beiden Dichtringen 21, 22 in dem metallischen Ring 12, der als Stützring wirkt. Außerdem ist die äußere Mantelfläche 25 des Isolierstoffringes 13 durch den Ring 12 gegen schädliche Einflüsse des Außenraums geschützt.

## Patentansprüche

1. Metallgekapselte, druckgasisolierte Hochspannungsschaltanlage mit isoliertem Erdungsschalter (3), dessen Gehäuse (6) über Flansche (7, 8) und diese verbindende Befestigungsmittel (9) an der Kapselung (1) der Hochspannungsschaltanlage angeflanscht ist, wobei zwischen beiden Flanschen (7, 8) ein Isolierstoffring (13) gasdicht angeordnet ist, an dessen Innenseite ein ringförmiger, mit einer Anschlußfahne (15) versehener elektrischer Leiter (14) derart eingebettet ist, daß die nach außen geführte Anschlußfahne (15) den Isolierstoffring (13) radial durchsetzt und der ringförmige Teil des Leiters (14) den Schaltstift (5) des Erdungsschalters (3) mit Abstand umgibt, wobei der Leiter (14) einen Gleitkontakt (19) trägt, über den er mit dem Schaltstift (5) elektrisch verbunden ist, **dadurch gekennzeichnet**, daß der Isolierstoffring (13) innerhalb eines metallischen Ringes (12) von zumindest gleicher Höhe liegt und mit diesem zwischen beiden Flanschen (7, 8) gasdicht angeordnet ist, daß der metallische Ring (12) eine radial gerichtete Öffnung (16) aufweist, durch die sich die mit einer Isolierstoffumhüllung (17) versehene Anschlußfahne (15) erstreckt, und daß die Befestigungsmittel (9) nur den äußeren metallischen Ring (12) durchsetzen.

2. Metallgekapselte, druckgasisolierte Hochspannungsschaltanlage nach Anspruch 1, **dadurch gekennzeichnet**, daß der Isolierstoffring (13) aus ausgehärtetem Gießharz besteht.

## Claims

1. Metal-enclosed, pressure gas-insulated high-voltage switching station with insulated earthing switch (3), the housing (6) of which is flange-mounted, by way of flanges (7, 8) and securing means (9) connecting the flanges, to the enclosure (1) of the high-voltage switching station, there being arranged between the two flanges (7, 8) in a gas-tight manner an insulating ring (13) on the inside of which there is embedded an annular electric conductor (14), provided with a terminal lug (15), such that the terminal lug (15), which is directed towards the exterior, radially passes through the insulating ring (13) and the annular portion of the conductor (14) surrounds the switching pin (5) of the earthing switch (3) with spacing, the conductor (14) bearing a sliding contact (19) by way of which it is electrically connected with the switching pin (5), characterised in that the insulating ring (13) lies within a metallic ring (12) of at least the same height and is arranged with the latter between the two flanges (7, 8) in a gas-tight manner, in that the metallic ring (12) has a radially directed opening (16) through which there extends the terminal lug (15) provided with an insulating covering (17) and in that the securing means (9) only pass through the outer metallic ring (12).

2. Metal-enclosed, pressure gas-insulated high-voltage switching station according to claim 1, characterised in that the insulating ring (13) consists of hard-set casting resin.

## Revendications

1. Installation de coupure à haute tension placée sous capot métallique et isolée par un gaz comprimé et comportant un interrupteur isolé de mise à la terre (3), dont le boîtier (6) est raccordé au moyen de brides (7,8) et de moyens de fixation (9), qui relient ces brides, au capot (1) de l'installation de coupure à haute tension, et dans laquelle entre les deux brides (7,8) est disposé, d'une manière étanche au gaz, un anneau en matériau isolant (13), dans la face intérieure duquel est inséré un conducteur électrique annulaire (14) pourvu d'une patte de raccordement (15), de sorte que la patte de raccordement ressortie (15) traverse radialement l'anneau en matériau isolant (13) et que la partie annulaire du conducteur (14) entoure à distance la tige de commande (5) de l'interrupteur de mise à la terre (3), le conducteur (14) portant un contact glissant (19) au moyen duquel il est raccordé électriquement à la tige de commande (5), caractérisée par le fait que l'anneau en matériau isolant (13) est disposé à l'intérieur d'un anneau métallique (12) ayant une hauteur au moins identique et est disposé, ainsi que cet anneau, d'une manière étanche au gaz entre les brides (7,8), que l'anneau métallique (12) possède une ouverture radiale (16) dans laquelle s'étend la languette de raccordement (15) pourvue d'une enveloppe en matériau isolant (17) et que les moyens de fixation (9) traversent uniquement l'anneau métallique extérieur (12).

2. Installation de coupure à haute tension placée sous capot métallique et isolée par un gaz comprimé suivant la revendication 1, caractérisée par le fait que l'anneau en matériau isolant (13) est formé par une résine de coulée durcie.

FIG 1

FIG 2